# EUROPÄISCHE PATENTSCHRIFT

(11) **EP 0 904 879 B1**
(45) Veröffentlichungstag und Bekanntmachung des Hinweises auf die Patenterteilung: **01.10.2003**
(21) Anmeldenummer: 98116054.2
(22) Anmeldetag: 26.08.1998
(51) Int. Cl.: B23G 5/14, B23B 31/10

(54) **Schnellwechseleinsatz**
Tool holder
Porte-outil

(30) Priorität: 25.09.1997 DE 19742269
(43) Veröffentlichungstag der Anmeldung: 31.03.1999
(73) Patentinhaber: Emuge-Werk Richard Glimpel Fabrik für Präzisionswerkzeuge (vormals Moschkau & Glimpel), D-91207 Lauf (DE)
(72) Erfinder: Watzke, Rüdiger, 91233 Speikern (DE)
(74) Vertreter: Matschkur, Lindner Blaumeier Patent- und Rechtsanwälte

(56) Entgegenhaltungen:
- EP-A- 0 123 003
- CH-A- 681 967
- DE-A- 4 107 864
- US-A- 5 398 946

## Beschreibung

Die Erfindung bezieht sich auf einen Schnellwechseleinsatz mit Hartmetalleinsatzwerkzeug, insbesondere Hartmetallgewindebohrer, und Futter zur Aufnahme des Schnellwechseleinsatzes, mit einer die Drehverbindung bildenden Aufnahme für einen Vierkant-Endabschnitt des Hartmetalleinsatzwerkzeugs und einer Auszugshalterung, wobei im Bereich des Vierkant-Endabschnitts wenigstens eine Vertiefung zum formschlüssigen Eingreifen eines begrenzt längsverschiebbar im Schnellwechseleinsatz gelagerten, federnd vorgespannten Arretiergliedes vorgesehen ist.

Üblicherweise ist die Auszugshalterung bei derartigen Schnellwechseleinsätzen in Form von Kugeln gebildet, die in der Wand des Schnellwechseleinsatzes gelagert sind und sich in die Außenfläche des Bohrers eindrücken. Wir verweisen in diesem Zusammenhang auf den _{"}Bilz" Schnellwechseleinsatz BA 105 Type WE. Dabei "graben" die Kugeln kleine kalottenförmige Vertiefungen in den Bohrer, so dass bei allen normalen Metallbohrern auf diese Art und Weise eine ausreichende Auszugssicherung erreicht wird. Dieses Halterungsprinzip funktioniert aber nicht oder allenfalls ungenügend bei Hartmetallbohrern oder allgemein Bohrern mit gehärtetem Schaft, da sich in diesem Fall die Kugeln nicht genügend in die Bohrerschaftoberfläche eindrücken und damit für eine ausreichende Auszugsverankerung sorgen können.

Aus der US 5,398,946 ist bereits ein Futter mit einer Halterung der eingangs genannten Art für ein Einsatzwerkzeug bekannt geworden, bei der die Auszugssicherung durch eine Vertiefung in Form einer Ringnut des sechskantförmigen Schaftes des Einsatzwerkzeugs und eine zum formschlüssigen Eingreifen dienendes Arretierglied in Form einer Kugel gebildet ist. Abgesehen davon, dass es sich nicht um einen Schnellwechseleinsatz handelt und dass zur Verdrehsicherung kein Vierkantendabschnitt vorgesehen ist, sondern das Einsatzwerkzeug von vorne herein einen sechskantförmigen Schaft aufweist, führt die umlaufende Nut für die Auszugssicherungs-Kugel zu einer störenden Schwächung des Schaftquerschnitts.

Darüber hinaus ist aus der Patentschrift DE 41 07 864 C2 auch bereits ein Schnellwechseleinsatz der eingangs genannten Art bekannt geworden, bei der die Auszugssicherung durch eine Vertiefung in Form einer Ringnut des Schaftes des Gewindebohrers und ein zum formschlüssigen Eingreifen dienendes Arretiergired in Form einer Exzenterscheibe vorgesehen ist. Durch Verdrehen der Exzenterscheibe kann ihr Innenrand zwischen einer Freigabe- und einer Eingriffsstellung in die Ringnut verschwenkt werden. Diese Anordnung ist relativ kompliziert ausgebildet und erfordert eine zusätzliche Einrichtung, um die Lösestellung von der Arretierstellung sicher unterscheiden zu können. Darüber hinaus besteht die Schwierigkeit, dass bei hohen Drehbeschleunigungen, insbesondere bei Richtungswechseln, durch ungewollte Verdrehung der Exzenterscheibe die Arretierung versehentlich selbsttätig gelöst wird.

Der Erfindung liegt daher die Aufgabe zugrunde, einen Schnellwechseleinsatz der eingangs genannten Art so auszugestalten, dass er auch bei Verwendung von Hartmetalleinsatzwerkzeugen, also insbesondere Hartmetallgewindebohrern, oder sonstigen Werkzeugen mit gehärtetem Schaft, eine ausreichende Auszugssicherung ohne Schwächung des Schafts durch die Auszugshalterung bietet, die auch bei Drehwechseln keine Probleme bereiten kann.

Zur Lösung dieser Aufgabe ist bei dem eingangs genannten Schnellwechseleinsatz mit Hartmetalleinsatzwerkzeug erfindungsgemäß vorgesehen, dass das Arretierglied ein Arretierstift ist, der im Einsatz durch einen übergreifenden Kragen des Fütterkörpers blockiert ist.

Im Gegensatz zur kraftschlüssigen Auszugshalterung bei den bekannten Kugelarretierungen arbeitet der erfindungsgemäße Schnellwechseleinsatz mit einer formschlüssigen Halterung, die im Betrieb absolut blockiert ist, so dass weder ein Herausziehen des Gewindebohrers noch ein Eindrücken stattfinden kann.

In Weiterbildung der Erfindung kann selbstverständlich auch vorgesehen sein, dass in mehreren, beispielsweise zwei einander gegenüberliegenden Flächen des Vierkant-Endabschnitts Vertiefungen für jeweils entsprechend viele Arretierstifte vorgesehen sind, wobei im einfachsten Fall die Vertiefung eine Kalotte zum Eingreifen eines Kegel- oder Kegelstumpfstiftes mit der Kalotte angepaßter Spitze ist.

Bevorzugt soll die Vertiefung als Quernut ausgebildet sein, da auf diese Art und Weise Toleranzfehler leichter ausgeglichen werden können und nicht die Gefahr besteht, daß der Arretierstift nicht exakt paßgenau in die Vertiefung eingreift, wie dies bei einem geringfügigen Seitenversatz bei einer kegelförmigen Spitze und einer kegelförmigen Kalotte in ungünstigen Fällen der Fall sein könnte. Aus diesem Grund ist im folgenden auch immer nur von einer Quernut die Rede.

Um das Lösen des Gewindebohrers nach dem Herausnehmen des Schnellwechseleinsatzes aus dem Futterkörper zu erleichtern, kann in Weiterbildung der Erfindung vorgesehen sein, daß der Arretierstift an seiner inneren Flanke mit einer Ausrastschräge versehen ist. Umgekehrt ist es zweckmäßig, den Gewindebohrer am inneren Ende mit einer Einsteckschräge zum Ausrücken des Arretierstiftes beim Einsetzen des Gewindebohrers in den Schnellwechseleinsatz zu versehen.

Um eine genaue Passung der Einstecktiefe des Gewindebohrers sicherzustellen, soll die Quernut an der äußeren Flanke senkrecht gestellt sein entsprechend der senkrechten Ausbildung der äußeren Flanke des Arretierstiftes.

Um eine funktionsbeeinträchtigende Verdrehung des bevorzugt als Rundstift ausgebildeten Arretierstiftes zu verhindern -unrunde Ausbildungen wären erheblich aufwendiger und würden insbesondere die Bildung der Lagerausnehmung im Schnellwechseleinsatz erschweren - kann in Weiterbildung der Erfindung vorgesehen sein, daß eine Verdrehsicherung vorgesehen ist.

Bevorzugt kann zu diesem Zweck der Arretierstift mit einer seitlichen oder auch mit einer in seiner äußeren Stirnfläche angeordneten Nut versehen sein, in die ein O-Ring eingreift, der vorzugsweise versenkt in einer umlaufenden Nut des Schnellwechseleinsatzes gelagert ist. Dieser O-Ring übernimmt dabei nicht nur die Verdrehsicherung, sondern auch gleichzeitig die federnde Vorspannung des Arretierstiftes in die nach innen verspannte Verriegelungsstellung.

Die Längsausbildung des Arretierstiftes ist dabei genau so bemessen, daß dann, wenn er in die Quernut eines eingesteckten Gewindebohrers eingerastet ist, seine äußere Stirnfläche genau bündig mit der Außenfläche des Schnellwechseleinsatzes liegt, so daß durch einen übergreifenden Kragen des Futterkörpers, in den der Schnellwechseleinsatz eingesteckt ist, der Arretierstift an jeder Bewegung nach außen und damit an einem ungewollten Lösen absolut sicher gehindert ist. Erst dann, wenn der Schnellwechseleinsatz wieder aus dem Futterkörper herausgenommen worden ist und damit der Arretierstift nach außen frei ist, kann der Gewindebohrer - begünstigt durch die Ausrastschräge - einfach herausgezogen werden.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: einen Längsschnitt durch einen in einen Futterkörper eingerasteten Schnellwechseleinsatz, und
- Fig. 2: den Schnellwechseleinsatz ohne den Futterkörper.

Der Gewindebohrer 1 ist in einem Schnellwechseleinsatz 2 mit Hilfe seines inneren Vierkantendabschnitts 3 verdrehsicher gehaltert. Zur Auszugshalterung ist im Vierkantendabschnitt 3 eine Quernut 4 eingebracht, in die ein begrenzt in einer Bohrung 5 beweglicher Arretierstift 6 eingreifen kann. Die Quernut weist eine im wesentlichen senkrechte vordere Flanke 7 und eine schräge hintere Flanke 8 auf, die einer entsprechend steilgestellten äußeren Flanke 9 des Arretierstifts 6 und einer entsprechend abgeschrägten Auszugsschräge 10 des Arretierstifts entsprechen. Zur Vorspannung des Arretierstifts in die nach innen gerichtete Arretierstellung dient ein O-Ring 11, der in eine umlaufende Nut 12 des Schnellwechseleinsatzes eingelegt in eine seitliche Nut 13 des Arretierstifts 6 eingreift. Dadurch bildet der O-Ring 11 gleichzeitig eine Verdrehsicherung des als Rundstift ausgebildeten Arretierstifts 6.

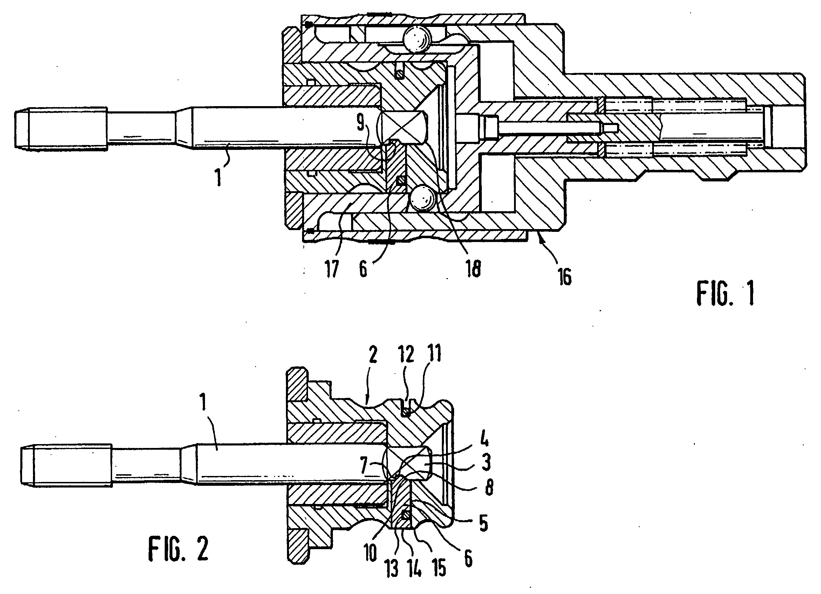

Die Länge des Arretierstiftes 6 ist dabei so gewählt, daß seine äußere Stirnfläche 14 in der Einsatzposition eines Gewindebohrers 1 genau in der Außenfläche 15 des Schnellwechseleinsatzes 2 liegt. In der in Fig. 1 gezeigten Einsetzposition des Schnellwechseleinsatzes in dem Futterkörper 16 ist deshalb der Arretierstift 6 durch den Kragen 17 des Futterkörpers, der an der Außenfläche 15 des Schnellwechseleinsatzes anliegt, gegen jegliche Bewegung nach außen blockiert. Ein durch die Auszugsschräge 10 erleichtertes Herausziehen des Gewindebohrers 1 ist daher nur möglich, wenn der Schnellwechseleinsatz 2 aus dem Futterkörper 16 herausgezogen ist. Der Futterkörper 16 soll an dieser Stelle im einzelenen nicht beschrieben werden, da solche Futterkörper in der Technik hinlänglich bekannt sind und das Wesen der Erfindung lediglich in der Ausbildung des Schnellwechseleinsatzes liegt.

Die Erfindung ist nicht auf das dargestellte Ausführungsbeispiel beschränkt. So wäre es, wie weiter oben bereits beschrieben worden ist, nicht nur möglich, statt nur einer Quernut in einer der Flächen des Vierkant-Endabschnitts auch mehrere Quemuten in mehreren Seitenflächen des Vierkant-Endabschnittes zum Eingreifen entsprechend vieler Arretierstifte vorzusehen. Es wäre in Abweichung vom gezeigten Ausführungsbeispiel auch möglich, den Arretierstift 6 auch an der Vorderflanke mit einer Abschrägung zu versehen, da diese nicht unbedingt zur paßgenauen Anlage des Gewindebohrers 1 benötigt wird, wie man aus den Zeichnungen erkennen kann. Schließlich wäre es auch möglich, anstelle einer Quernut nur eine kalottenförmige Vertiefung entsprechend einer kegelförmigen oder kegelstumpfförmigen Spitze des Arretierstifts 6 zu verwenden.

## Patentansprüche

1. Schnellwechseleinsatz mit Hartmetalleinsatzwerkzeug, insbesondere Hartmetallgewindebohrer, und Futter (16, 17) zur Aufnahme des Schnellwechseleinsatzes, mit einer die Drehverbindung bildenden Aufnahme für einen Vierkant-Endabschnitt (3) des Hartmetalleinsatzwerkzeugs (1) und einer Auszugshalterung, wobei im Bereich des Vierkant-Endabschnitts wenigstens eine Vertiefung (4) zum formschlüssigen Eingreifen eines begrenzt längsverschiebbar im Schnellwechseleinsatz gelagerten, federnd vorgespannten Arretiergliedes (6) vorgesehen ist, **dadurch gekennzeichnet, dass** das Arretierglied ein Arretierstift (6) ist, der im Einsatz durch einen übergreifenden Kragen (17) des Futterkörpers (16) blockiert ist.

2. Schnellwechseleinsatz nach Anspruch 1, **dadurch gekennzeichnet, dass** die Vertiefung eine Kalotte zum Eingreifen eines Kegel- oder Kegelstumpfstiftes ist.

3. Schnellwechseleinsatz nach Anspruch 1, **dadurch gekennzeichnet, dass** die Vertiefung eine Quernut (4) ist.

4. Schnellwechseleinsatz nach einem der Ansprüche 1 bis 3, **dadurch gekennzeichnet, dass** in mehreren Flächen des Vierkant-Endabschnitts (3) Vertiefungen für Arretierstifte vorgesehen sind.

5. Schnellwechseleinsatz nach einem der Ansprüche 1 bis 4, **dadurch gekennzeichnet, dass** der Arretierstift (6) an seiner inneren Flanke (10) mit einer Ausrastschräge versehen ist.

6. Schnellwechseleinsatz nach einem der Ansprüche 1 bis 5, **dadurch gekennzeichnet, dass** das Hartmetalleinsatzwerkzeug (1) am inneren Ende mit einer Einsteckschräge (18) zum Ausrücken des Arretierstifts (6) versehen ist.

7. Schnellwechseleinsatz nach einem der Ansprüche 3 bis 6, **dadurch gekennzeichnet, daß** der als Rundstift ausgebildete Arretierstift (6) mit einer Verdrehsicherung versehen ist.

8. Schnellwechseleinsatz nach einem der Ansprüche 1 bis 7, **dadurch gekennzeichnet. daß** der Arretierstift (6) mit einer seitlichen Nut (13) versehen ist, in die ein O-Ring (11) eingreift.

## Claims

1. Quick-change insert with hard metal insert tool, in particular hard metal tap, and chuck (16, 17) for receiving the quick-change insert, having a seat forming the rotary connection for a square end section (3) of the hard metal insert tool (1) and a withdrawing mount, wherein in the region of the square end section at least one recess (4) is provided for the positively locking engagement of a locking member (6), which is mounted with limited longitudinal displacement in the quick-change insert and is resiliently biased, **characterised in that** the locking member is a locking pin (6), which is locked in use by an overlapping collar (17) of the chuck body (16).

2. Quick-change insert according to claims 1, **characterised in that** the recess is a dome for the engagement of a conical or frustoconical pin.

3. Quick-change insert according to claim 1, **characterised in that** the recess is a transverse groove (4).

4. Quick-change insert according to one of claims 1 to 3, **characterised in that** in plural faces of the square end section (3) recesses for locking pins are provided.

5. Quick-change insert according to one of claims 1 to 4, **characterised in that** the locking pin (6) is provided on its inner flank (10) with a disengagement slope.

6. Quick-change insert according to one of claims 1 to 5, **characterised in that** the hard metal insert tool (1) is provided at the inner end with an insertion slope (18) for disengaging the locking pin (6).

7. Quick-change insert according to one of claims 3 to 6, **characterised in that** the locking pin (6) formed as a rounded pin is provided with a rotation lock.

8. Quick-change insert according to one of claims 1 to 7, **characterised in that** the locking pin (6) is provided with a lateral groove (13), in which an O-ring (11) engages.

## Revendications

1. Garniture de changement rapide d'un outil de rechange en métal dur, en particulier d'un foret fileté et métal dur, comportant un manchon (16, 17) destiné à recevoir la garniture de changement rapide, avec un système de réception assurant la liaison en rotation avec une zone terminale à section carrée (3) de l'outil de rechange en métal dur (1 ), et un appui de sortie, dans la région de la zone terminale à section carrée étant prévu au moins évidement 4 destiné à l'accrochage verrouillé d'un élément d'arrêt (6) monté dans la garniture de changement rapide, de manière déplaçable longitudinalement d'une quantité limitée et attelé de manière élastique, **caractérisée en ce que** l'élément d'arrêt consiste en une cheville d'arrêt (6) qui est bloquée dans la garniture au moyen d'une collerette qui la surplombe (7) du corps du manchon.

2. Garniture de changement rapide selon la revendication 1, **caractérisée en ce que** l'évidement consiste en une calotte destinée à s'accrocher à une cheville en forme de cône ou de tronc de cône.

3. Garniture de changement rapide selon la revendication 1, **caractérisée en ce que** l'évidement est une rainure à section carrée.

4. Garniture de changement rapide selon l'une quelconque des revendications 1 à 3, **caractérisée en ce que** des évidements pour des chevilles d'arrêt sont prévues dans plusieurs surfaces de la zone terminale à section carrée.

5. Garniture de changement rapide selon l'une quelconque des revendications 1 à 4, **caractérisée en ce que** la cheville d'arrêt (6) présente sur son flan intérieure (10) une pente de repos vers l'extérieur.

6. Garniture de changement rapide selon l'une quelconque des revendications 1 à 5, **caractérisée en ce que** l'outil de rechange en métal dur (1) présente à son extrémité interne une pente d'insertion (18) pour le désengagement de la cheville d'arrêt (6).

7. Garniture de changement rapide selon l'une quelconque des revendications 3 à 6, **caractérisée en ce que** la cheville d'arrêt (6) en forme de cheville ronde présente une sécurité vis-à-vis de la torsion.

8. Garniture de changement rapide selon l'une quelconque des revendications 1 à 7, **caractérisée en ce que** la cheville d'arrêt (6) présente une rainure latérale (13) dans laquelle s'accroche une bague en O.
